# EUROPEAN PATENT SPECIFICATION

(11) **EP 2 059 124 B1**
(45) Date of publication and mention of the grant of the patent: **15.06.2016**
(21) Application number: 07819917.1
(22) Date of filing: 30.07.2007
(51) Int. Cl.: A01N 25/30, A01N 29/06, A01N 31/04, A01N 33/18, A01N 37/34, A01N 37/46, A01N 43/12, A01N 43/24, A01N 43/32, A01N 43/40, A01N 43/54, A01N 43/58, A01N 43/653, A01N 43/70, A01N 43/76, A01P 3/00, A01P 7/04

(54) **POLYMERIC SURFACTANT USEFUL FOR THE PREPARATION OF PESTICIDAL AGROCHEMICAL COMPOSITIONS**
POLYMERES TENSID ZUR HERSTELLUNG PESTIZIDER AGROCHEMISCHER ZUSAMMENSETZUNGEN
TENSIOACTIF POLYMÉRIQUE UTILISÉ POUR PRÉPARER DES COMPOSITIONS AGROCHIMIQUES PESTICIDES

(30) Priority: 03.08.2006 IT VA20060050
(43) Date of publication of application: 20.05.2009
(73) Proprietor: Lamberti SpA, 21041 Albizzate (IT)
(72) Inventor: FEDERICI, Franco, 21052 Busto Arsizio (IT); BOHUS, Peter, 21040 Caronno Varesino (IT); PAGANINI, Gianfranco, 20020 Magnago (IT); LI BASSI, Giuseppe, 21026 Gavirate (IT)
(86) International application number: PCT/EP2007/057823
(87) International publication number: WO 2008/015185

(56) References cited:
- EP-A- 0 099 179
- EP-A- 0 510 580
- EP-A- 0 510 762
- WO-A-03/055304
- WO-A-03/055305
- WO-A-03/055306
- GB-A- 1 576 762
- US-A- 4 992 194
- R. BUSCALL & T. CORNER: "Random copolymers as dispersions stabilisers. Part 1. Synthesis and solution properties" COLLOIDS AND SURFACES, vol. 17, 1986, pages 25-38, XP002492003

## Description

The present invention relates to pesticidal agrochemical compositions (phytopharmaceuticals) containing a polymeric surfactant based on a) acrylic acid or methacrylic acid and/or 2-acrylamido-2-methylpropanesulfonic acid and b) an acrylic or methacrylic ester of a C₈-C₁₈ alcohol, as dispersing agent and stabiliser.

Pesticides, depending on the characteristics of the active substance that they contain and on their use, may be formulated as dry powders, wettable powders, dispersible granules, suspensions, concentrated emulsions and solutions, and their application on the soil, seeds and plants foliage generally occurs in the form of aqueous solution, suspension or emulsion.

In order to disperse and suspend solid pesticidal substances or to emulsify oily liquids in water, to prepare stable suspensions or emulsions , surfactants are normally employed; beside assisting the formation of mixtures of water and water insoluble materials, surfactants reduce the interfacial tension between water and the treated substrate and improve the distribution and penetration of the active substance.

Among the surfactants used for this scope, polymeric surfactants, particularly those that are obtained by copolymerisation of monomers containing strongly acidic groups such as sulfonic groups, are known and have been appreciated for a long time.

US 5,693,716 (Dow Chem. Co.), for example, describes substantially non aqueous compositions containing a pesticide and graft polymers comprising a hydrophobic portion and at least an hydrophilic monomer (such as 2-acrylamido-2-methylpropanesulfonic acid).

EP 1 007 598 (Lubrizol) describes agrochemical spray compositions containing up to 1000 ppm (0.1 %) of an aqueous composition comprising a polymer obtained copolymerising a hydrophilic monomer (such as 2-acrylamido-2-methylpropanesulfonic acid) and a hydrophobic monomer.

US patent application US 2006/0142159 (Clariant) claims the use of polymers obtained by radical polymerisation of A) 2-acrylamido-2-methylpropanesulfonic acid and/or salt thereof; B) one or more ethoxylated or propoxylated macromonomers; C) optionally, one or more ethylenically mono- or poly-unsaturated monomers, as stabilisers for concentrated suspensions.

EP 99179 A2 describes dispersions of organic particulate solids comprising a copolymer based on at least one hydrophilic monomer and at least one hydrophobic monomer. In a particular embodiment, the at least one hydrophilic monomer comprises a carboxylic acid and a sulfonic acid in a weight ratio from 2:1 to 30:1. WO 03/055305, WO 03/055304 and WO/055306 relate to plant protection formulations comprising polymers based on acrylamidopropylmethylenesulphonic acids (AMPS) and macromonomers. The polymers may be both highly hydrophobic and highly hydrophilic, their rnacromonomer content varying from 0.1 % by weight to 99.9% by weight. WO 03/055304 and WO/055306 report the synthesis of a copolymer obtained from AMPS (7% mol) and stearylacrylate (93% mol) and its use, respectively, in agrochemical suspension concentrates and wettable powders.

Polymeric surfactants are used also in other industrial fields, such as in the cosmetic, paints and varnishes and textile fields.

US 5,422,176 (BASF) describes copolymers containing from 20 to 90% by weight of 2-acrylamido-2-methylpropanesulfonic acid and from 0.1 to 10% by weight of styrene or acrylic or methacrylic acid C₄-C₁₈ esters, and other monomers, together with their use as colloid protectors in the preparation of microcapsules.

EP 750899 (Shiseido) describes cosmetic compositions in the form of emulsions or solutions containing polymeric surfactants based on 2-acrylamido-2-methylpropanesulfonic acid and (meth)acrylic esters. Patent specification GB 1 576 162 describes polymeric surface active agents based on acrylic ester monomers and olefinically unsaturated carboxylic acids optionally comprising monomers units derived from an olefinically unsaturated sulfonic acid. The surface active polymers of GB 1 576 762 are obtained by copolymerizing at most 15% by weight of the olefinically unsaturated sulfonic acid.
EP 510580 reports the preparation of copolymers of acrylic acid (AA), 2-acrylamido-2-propane-sulfonic acid (AMPS) and lauryl methacrylate in a non aqueous medium. EP 510580 does not disclose copolymers in which the molar percentage of AMPS on the sum of AA+AMPS is higher that 13%.
EP 510762 describes the use of copolymers having the same molar compositions in non-aqueous liquid cleaning products.
US 4992194 relates to aqueous detergent formulations comprising a copolymer of hydrophilic and hydrophobic monomers. Copolymers of acrylic acid, 2-acrylamido-2-propane-sulfonic acid and lauryl methacrylate are reported as examples, but they all contain less than 4% in moles of the hydrophobic monomer (lauryl methacrylate).

Copolymers of acrylic acid and 2-acrylamido-2-propane-sulfonic acid with acrylic esters monomers are also reported in Colloids and Surfaces, 17 (1986) 25-38. The copolymers contain at most 8.3% in moles of the acrylic ester monomer (lauryl methacrylate).

It has now been found that the use of a polymer as defined in the aqueous composition of claim 1 provides unexpected advantages in the preparation of agrochemical compositions comprising at least a pesticidal active substance and from 0.5 to 10% by weight of the said polymer.

In particular, the polymer according to the invention behaves as a very good dispersing agent in milling; furthermore the polymer is very efficient in promoting the formation of stable aqueous systems comprising both organic and inorganic materials.

For the use in the preparation of agrochemical composition the polymeric surfactant of the present invention is in the form of stable and homogenous aqueous concentrated composition.

It is therefore an object of the present invention an aqueous composition according to claim 1.

It is a further object of the Invention a pesticidal agrochemical composition according to claim 3.

The use of the above described aqueous compositions in the preparation of pesticidal agrochemical compositions and the use in agriculture of these compositions for the treatment of seeds, plants, fields, etc. are other objects of the invention.

The characteristics and advantages of using the polymer according to the present invention are illustrated in detail in the following description.

### DETAILED DESCRIPTION

Copolymers obtained by radical polymerization of 2-acrylamido-2-methylpropanesulfonic acid and acrylic or methacrylic acid ester of C₈-C₁₈ alcohols are known.

An example of the preparation of copolymers of 2-acrylamido-2-methylpropanesulfonic acid and lauryl methacrylate by radical polymerisation in solvent (dimethyl formamide), of the isolation by precipitation is reported in Macromolecules, 1999, 32, 4631-4640.

It has now been found that it is possible to prepare the polymers that are useful for the realisation of the invention by radical polymerisation of the monomers in hydroalcoholic mixtures, preferably in a water isopropanol mixture, and to obtain them in the form of a stable and homogeneous aqueous composition having a concentration comprised between 30 and 60%.

The aqueous composition of the polymer are advantageously used as such as dispersing agent and stabilisers of pesticides and revealed to be particularly suitable for the preparation of concentrated aqueous suspensions.

When used in the preparation of aqueous suspension, these aqueous compositions further prevent the flocculation of the pesticides diluted for use.

Moreover, an aqueous composition in which the polymer is obtained by polymerising a) from 60 to 90% molar of 2-acrylamido-2-methylpropanesulfonic acid; b) from 10 to 40% molar of an acrylic or methacrylic acid ester of a C₈-C₁₈ alcohol is particularly advantageous as milling adjuvant in the preparation of concentrated suspensions.

Lauryl acrylate and lauryl methacrylate are particularly preferred for the realisation of the present invention.

The polymeric surfactant useful for the realisation of the invention does not contain crosslinking agents, nor ethoxylated or propoxylated monomers, the stability of its aqueous compositions and its rheological behaviour being determined by molar proportion of carboxylic and/or sulfonic groups and hydrophobic C₈-C₁₈ groups.

In the preparation of the aqueous composition according to the invention the use of a water and isopropanol mixture is advantageous because isopropanol acts as chain transfer in the polymerisation reaction and allows the regulation of the average numeral molecular weight from 1,000 to 5,000 dalton; the average numeral molecular weight is a characteristic of the polymer of the invention.

Best results are obtained with polymers having average numeral molecular weight from 1,000 to 5,000.

The aqueous composition according to the invention may be used to formulate active substances in the form of concentrated suspension, dispersible granules, concentrated emulsion, thus obtaining a composition that can be applied as such on the substrate, or can be diluted as necessary with water or other proper solvent, even just before use.

The agrochemical compositions of the inventions are the form of concentrated suspension.

For the preparation of concentrated aqueous suspensions, the aqueous composition of the polymeric surfactant is diluted with water to obtain a polymer concentration of 0.5-5% by weight; the solid active substance is added to the diluted composition, while mixing; the obtained dispersion is milled until the particle size of the active substance allows dispersion stability and bio-availability of the active substance itself. The rheology may be regulated with a thickening agent.

According to a particular embodiment of the invention, the agrochemical compositions in the form of aqueous suspensions comprise at least an active substance having pesticidal activity, and water or mixtures of water and glycol and/or glycerine as carrier; preferably, the amount of active substance is comprised between 5 to 50%, and the amount of carrier is the balance to 100.

The agrochemical compositions of the invention may further contain one or more additives with different functions, such as:
- Fertilisers or micronutrients;
- Other surfactants, beside those of the composition according to the invention;
- Other products, such as anti-foam agents, anti-freeze agents, colorants, stabilisers and buffers;
- the additives normally used in agrochemical composition.

The agrochemical compositions comprise one or more active substances having pesticidal activity (or pesticides).

The term "pesticide" (or phytosanitary, or agro-pharmaceutical, or parasiticide) refers to a category of specialties used to treat plants desease or to regulate their life cycle (with the exception of fertilisers).

These specialties are diversified according to their function:
- Fungicides if they act on fungi
- Insecticides and acaricides, if they act on insects
- Herbicides or weedkillers, if they act on weeds
- Nematicides or fumigators, if they are useful for soil pest control
- Plant growth regulators

The pesticides utilisable in the agrochemical compositions of the invention are, for example: Alphacypermethrin, Atrazine, Bromacil, Captan, Carbaryl, Carbendazim, Carbofuran, Carboxin, Chloridazon, Chlorthalonl, Chlortoluron, Copper oxychloride, Copper oxyquinolate, Copper hydroxide, Copper Basic Trisulfate, Deltamethrin, Dicofol, Diuron, Dodine, Endosulfan, Ethofumesate, Fentin Hydroxide, Fluometuron, Folpet, Lindane, Linuron, Mancozeb, Metalaxyl, Metobromuron, Oxadiazon, Pendimethalin, Permethrin, Phenmedipham, Propachlor, Propanil, Propiconazol, Propoxur, Simazine, Sulphur, Tetramethrin, Thiophanate methyl, Thiram, Triadimefon, Triadimenol, Trifluralin, Vinclozolin, Zineb, Ziram, and mixture thereof.

The aqueous composition according to the invention is particularly useful for the preparation of concentrated suspensions of Bordeaux mixture, a mix of copper sulfate and hydrated lime in water, which is largely used as fungicide.

The Bordeaux mixture is commonly prepared by adding the solid components in water (the typical dosage of the mixture for foliage application are about 1 Kg of copper sulphate each 0.8 Kg of hydrated lime in 100 litres of water). Concentrated suspension of the solid components in water are more and more appreciated by users, for easy of dosing and because they help to obtain homogeneous mixtures.

Examples

### EXAMPLE 1

### Preparation of an aqueous composition of the invention.

### (Composition 1)

A solution of monomers is prepared with the following ingredients:

| | |
|---|---|
| Lauryl methacrylate (PM 254.42) | 55.3 g |
| 2-acrylamido-2-methylpropanesulfonic acid (PM 207.2) | 224.9 g |
| water | 224.9 g |
| ispropanol | 146.4 g |

2-acrylamido-2-methylpropanesulfonic acid is dissolved in water and isopropanol, lauryl methacrylate is added after dissolution and keeping stirred.

The following solution of persulfate is prepared:

| | |
|---|---|
| Ammonium persulfate | 9.7 g |
| water | 65.1 g |
| A reactor is charged with: | |
| water | 56.5 g |
| isopropanol | 225.8 g |

and heated with an external bath at 90° until boiling starts (about 78°C). The two solutions are added in about 1 hour. When the feeding ends, the temperature is kept for 10 minutes.

The apparatus for distillation with distillation column and collecting flask is prepared, 85.5 g of NaOH 50% are added drop wise exploiting the heat of reaction to distillate, vacuum is applied and isopropanol is removed.

When the distillation is complete the temperature is lowered to 25°C, the pH is regulated between 7 and 9 with NaOH 50% and the dry matter is brought to 40% with water (Composition 1)

The numeral molecular weight of the polymer obtained is 2,712.

### EXAMPLE 2

### Preparation of an aqueous composition of the invention (Composition 2)

An aqueous composition is prepared with the same procedure of Example 1, but the 224.9 g of 2-acrylamido-2-methylpropanesulfonic acid are replaced by 165.9 g of 2-acrylamido-2-methylpropanesulfonic acid and 110.6 g of acrylic acid.

### EXAMPLE 3

### Preparation of an aqueous comparative composition (Composition 3)

An aqueous composition is prepared with the same procedure of Example 1, but the 224.9 g of 2-acrylamido-2-methylpropanesulfonic acid are replaced by276.5 g of 2-acrylamido-2-methylpropanesulfonic acid and 22.12 g of methoxypolyethyleneglycol (1000) methacrylate.

### EXAMPLE 4

### Preparation of an aqueous comparative composition (Composition 4)

An aqueous composition is prepared with the same procedure of Example 1, but the 224.9 g of 2-acrylamido-2-methylpropanesulfonic acid are replaced by276.5 g of 2-acrylamido-2-methylpropanesulfonic acid sodium salt and 22.12 g of methoxypolyethyleneglycol (1000) methacrylate.

### EXAMPLE 5

### Preparation of concentrated suspensions.

The Compositions 1-4 are used to prepare 4 concentrated suspensions of Diuron (respectively named SC1, SC2, SC3 and SC4), at concentration of 500 g/l of active substance; the Compositions were diluted with water, the other liquid ingredients and added, then Diuron was added and milled in a Dyno Mill KDL (Willy Bachofen, CH) mill at 3200 rpm for 2 hours (volume of balls 250 ml)

The percentage composition of the concentrated suspensions is reported in Table 1.

**Table 1 - Compositions 1-4**

| % | SC1 | SC2 | SC3²⁾ | SC4²⁾ |
|---|---|---|---|---|
| Diuron | 42 | 42 | 42 | 42 |
| Monopropylene glycol | 13 | 13 | 13 | 13 |
| EMULSON AG/TRST¹⁾ | 0.5 | 0.5 | 0.5 | 0.5 |
| Composition 1 | 3.0 | - | - | - |
| Compostion 2 | - | 3.0 | - | - |
| Composition 3²⁾ | - | - | 3.0 | - |
| Composition 4²⁾ | | - | - | 3.0 |
| Rodopol 23 (2%) | 6 | 6 | 6 | 6 |
| Anti foam | 0.5 | 0.5 | 0.5 | 0.5 |
| Distilled water | to 100 | to 100 | to 100 | to 100 |

| | | | | |
|---|---|---|---|---|
| 1) surfactant sold by Cesalpinia Chemicals SpA 2) comparative | | | | |

The particle size distribution (G) and the percentage suspensibility (DS %) of SC1-SC4 were measured according to the CIPAC Methods MT 187 and MT 161 respectively; the Brookfield viscosity was measured and the results are reported in Table 2.

**Table 2**

| | SC1 | SC2 | SC3²⁾ | SC4²⁾ |
|---|---|---|---|---|
| G¹⁾ | 0.567 | 0.719 | 0.738 | 0.775 |
| DS % | 94 | 95 | 93 | 89 |
| Viscosity s 3-100 rpm | 62 | 179 | 140 | 56 |
| Viscosity s 2-50 rpm | 58 | 30 | 229 | 60 |
| Viscosity s 3-10 rpm | 64 | 44 | 480 | 92 |

| | | | | |
|---|---|---|---|---|
| 1) average particle size in micron 2) comparative | | | | |

## Claims

1. Aqueous composition containing from 30 to 60 % by weight of the polymer obtained by polymerising: a) from 60 to 90% in moles of a mixture comprising a') from 0 to 70% in moles of acrylic or methacrylic acid and a") from 30 to 100% molar of 2-acrylamido-2-methylpropanesulfonic acid; b) from 10 to 40% molar of an acrylic or methacrylic acid ester of a C₈-C₁₈ alcohol, and having average numeral molecular weight comprised between 1,000 and 5,000 dalton, and at least 20% by weight of water.

2. Aqueous composition according to claim 1 in which the polymer is obtained by polymerising a) from 60 to 90% molar of 2-acrylamido-2-methylpropanesulfonic acid; b) from 10 to 40% molar of an acrylic or methacrylic acid ester of a C₈-C₁₈ alcohol.

3. Pesticidal agrochemical composition, **characterised by** the fact that it is in the form of a concentrated suspension and comprises from 0.5 to 10% by weight of a polymer obtained by polymerising: a) from 60 to 90% in moles of a mixture comprising a') from 0 to 70% in moles of acrylic or methacrylic acid and a") from 30 to 100% molar of 2-acrylamido-2-methylpropanesulfonic acid; b) from 10 to 40% molar of an acrylic or methacrylic acid ester of a C₈-C₁₈ alcohol, having average numeral molecular weight comprised from 1,000 to 5,000 dalton, at least a pesticidal active substance, and a carrier,

4. Pesticidal agrochemical composition according to claim 3 in which the polymer is obtained by polymerising a) from 60 to 90% molar of 2-acrylamido-2-methylpropanesulfonic acid; b) from 10 to 40% molar of an acrylic or methacrylic acid ester of a C₈-C₁₈ alcohol.

5. Pesticidal agrochemical composition according to claim 3 or 4 **characterised by** the fact that the active substance is selected in the group consisting of: Alphacypermethrin, Atrazine, Bromacil, Captan, Carbaryl, Carbendazim, Carbofuran, Carboxin, Chloridazon, Chlorthalonl, Chlortoluron, Copper oxychloride, Copper oxyquinolate, Copper hydroxide, Copper Basic Trisulfate, Deltamethrin, Dicofol, Diuron, Dodine, Endosulfan, Ethofumesate, Fentin Hydroxide, Fluometuron, Folpet, Lindane, Linuron, Mancozeb, Metalaxyl, Metobromuron, Oxadiazon, Pendimethalin, Permethrin, Phenmedipham, Propachlor, Propanil, Propiconazol, Propoxur, Simazine, Sulphur, Tetramethrin, Thiophanate methyl, Thiram, Triadimefon, Triadimenol, Trifluralin, Vinclozolin, Zineb, Ziram, and mixture thereof.

## Patentansprüche

1. Wässrige Zusammensetzung enthaltend von 30 bis 60 Gewichtsprozent des Polymers erhalten durch Polymerisieren von: a) von 60 bis 90 Molprozent einer Mischung enthaltend a') von 0 bis 70 Molprozent Acryl- oder Methacrylsäure und a") von 30 bis 100 Molprozent 2-Acrylamido-2-methylpropansulfonsäure; b) von 10 bis 40 Molprozent eines Acryl- oder Methacrylsäureesters eines C₈-C₁₈-Alkohols und mit einem zahlenmittleren Molekulargewicht zwischen 1000 und 5000 Dalton, und mindestens 20 Gewichtsprozent Wasser.

2. Wässrige Zusammensetzung gemäß Anspruch 1, wobei das Polymer erhalten wird durch Polymerisieren von a) von 60 bis 90 Molprozent 2-Acrylamido-2-methylpropansulfonsäure; b) von 10 bis 40 Molprozent eines Acryl- oder Methacrylsäureesters eines C₈-C₁₈-Alkohols.

3. Schädlingsbekämpfende agrochemische Zusammensetzung, **dadurch gekennzeichnet dass** sie die Form einer konzentrierten Suspension hat und von 0.5 bis 10 Gewichtsprozent eines Polymers enthält erhalten durch Polymerisieren von: a) von 60 bis 90 Molprozent einer Mischung enthaltend a') von 0 bis 70 Molprozent Acryl- oder Methacrylsäure und a") von 30 bis 100 Molprozent 2-Acrylamido-2-methylpropansulfonsäure; b) von 10 bis 40 Molprozent eines Acryl- oder Methacrylsäureesters eines C₈₋C₁₈-Alkohols, mit einem zahlenmittlere Molekulargewicht zwischen 1000 und 5000 Dalton, mindestens einer aktiven schädlingsbekämpfenden Substanz und einem Trägerstoff.

4. Schädlingsbekämpfende agrochemische Zusammensetzung gemäß Anspruch 3, wobei das Polymer erhalten wird durch Polymerisieren von a) von 60 bis 90 Molprozent 2-Acrylamido-2-methylpropansulfonsäure; b) von 10 bis 40 Molprozent eines Acryl- oder Methacrylsäureesters eines C₈-C₁₈-Alkohols.

5. Schädlingsbekämpfende agrochemische Zusammensetzung gemäß Anspruch 3 oder 4 **dadurch gekennzeichnet dass** die aktive Substanz ausgewählt wird aus der Gruppe bestehend aus: Alpha-cypermethrin, Atrazin, Bromacl1. Captan, Carbaryl, Carbendazim, Carbofuran, Carboxin, Chloridazon, Chlorthalunil, Chlortoluron, Kuppferoxychlorid, Kupferoxyquinolat, Kupferhydroxid, Kupfer-basisches-Trisulfat, Deltamethrin, Dicofol, Diuron, Dodin, Endosulfan, Ethofumesat, Fentin-hydroxid, Fluometuron, Folpet, Lindan, Llnuron, Mancozeb, Metalaxyl, Metobromuron, Oxadiazon, Pendimethalin, Permethrin, Phenmedipham, Propachlor, Propanil, Propiconazol, Propoxur, Simazin, Sulfur, Tetramethrin, Thiophanat-methyl, Thiram, Triadimefon, Triadimenol, Trifluralin, Vinclozolin, Zineb, Ziram, und eine Mischung daraus

## Revendications

1. Composition aqueuse contenant de 30 à 60% en poids du polymère obtenu par polymérisation; a) de 60 à 90% en moles d'un mélange comprenant a') de 0 à 70% molaire d'acide acrylique ou méthacrylique et a") de 30 à 100% molaire d'acide 2-acrylamido-2-méthylpropanesulfonique, b) de 10 à 40% molaire d'un ester d'acide acrylique ou méthacrylique d'un alcool C₈-C₁₈, et ayant un poids moléculaire moyen numérique compris entre 1000 et 5000 dalton, et au moins 20% en poids d'eau.

2. Composition aqueuse selon la revendication 1 dans laquelle le polymère est obtenu par polymérisation a) de 60 à 90% molaire d'acide 2-acrylamido-2-méthylpropanesulfonique; b) de 10 à 40% molaire d'un ester d'acide acrylique ou méthacrylique d'un alcool C₈-C₁₈.

3. Composition agrochimique pesticide, **caractérisée par le fait qu'**elle se présente sous la forme d'une suspension concentrée et comprend de 0,5 à 10% en poids d'un polymère obtenu par polymérisation : a) de 60 à 90% en moles d'un mélange comprenant a') de 0 à 70% en moles d'acide acrylique ou méthacrylique et a") de 30 à 100% molaire d'acide 2-acrylamido-2-méthylpropanesulfonique, b) de 10 à 40% molaire d'un ester acrylique ou méthacrylique d'un alcool C₈-C₁₈, et ayant un poids moléculaire moyen numérique compris entre 1000 et 5000 dalton, au moins une substance active pesticide, et un véhicule.

4. Composition agrochimique pesticide selon la revendication 3 dans laquelle le polymère est obtenu par polymérisation a) de 60 à 90% molaire d'acide 2-acrylamido-2-méthylpropanesulfonique; b) de 10 à 40% molaire d'un ester d'acide acrylique ou méthacrylique d'un alcool C₈-C₁₈.

5. Composition agrochimique pesticide selon la revendication 3 ou 4 **caractérisée par le fait que** la substance active est choisie dans le groupe constitué par : alpha-cyperméthrine, atrazine, bromacil, captan, carbaryl, carbendazime, carbofuran, carboxine, chloridazon, chlorothalonil, chlortoluron, oxychlorure de cuivre, oxyquinolate de cuivre, hydroxyde de cuivre, trisulfate de cuivre basique, deltaméthrine, dicofol, diuron, dodine, endosulfan, Éthofumésate, hydroxyde de fentine, fluométyron, folpet, lindane, linuron, Mancozèbe, métalaxyl, métobromuron, oxadiazon, pendiméthaline, perméthrine, phenmédiphame, propachlore, propanil, propiconazole, propoxur, Sirnazine, soufre, tétraméthrine, thiophanate-méthyl, thirame, triadiméfon, Triadiménol, trifluraline, vinclozoline, zineb, zirame, et un mélange de ceux-ci. Perméthrine, phenmédiphame, propachlore, propanil, propiconazole, propoxur, Sirnazine, soufre, tétraméthrine, thiophanate-méthyl, thirame, triadiméfon, Triadiménol, trifluraline, vinclozoline, zineb, zirame, et un mélange de ceux-ci.
